Europäisches Patentamt

European Patent Office

Office européen des brevets

(19)

(11) Publication number: **0 134 114**
**A2**

(12) # EUROPEAN PATENT APPLICATION

(21) Application number: **84305222.6**

(22) Date of filing: **01.08.84**

(51) Int. Cl.⁴: **B 01 J 13/02,** B 41 M 5/00

(30) Priority: **18.08.83 US 524309**

(43) Date of publication of application: **13.03.85**
**Bulletin 85/11**

(84) Designated Contracting States: **AT BE CH DE FR GB IT LI LU NL SE**

(71) Applicant: **Moore Business Forms, Inc., 300 Lang Boulevard, Grand Island, New York 14072 (US)**

(72) Inventor: **Hung-Ya, Chao, 10 Presidio Place, Williamsville New York (US)**

(74) Representative: **Townsend, Derek Thomas et al, Barlin Professional Services Barlin House 20 High Street, Carshalton Surrey SM5 3AG (GB)**

(54) **Microcapsules with reduced permeability.**

(57) A method of producing microcapsules with reduced permeability is disclosed whereby a produced microcapsule is reacted with the reaction product of formaldehyde and a member of the group consisting of bisphenol A; bisphenol B; bisphenol F; p,p' dihydroxy 1,1 diphenylethane; alkylated phenols; 4,4' dihydroxybiphenyl; sulfonyldiphenol; and 1,5 dihydroxynaphthalene such that discontinuities in the outermost layer of the produced microcapsule are closed.

EP 0 134 114 A2

## MICROCAPSULES WITH REDUCED PERMEABILITY

## BACKGROUND OF THE INVENTION

### Field of the Invention

The present invention relates to microcapsules and methods of microencapsulating a core of fill material. The resulting microcapsules are adaptable to a variety of applications, but particularly for use in carbonless copying systems.

### Background of the Invention

Microcapsules generally comprise a core of fill material surrounded by a wall or shell of polymeric material. The fill material may be either gaseous, liquid, or solid, and may be composed of a single substance, a solution, a suspension or a mixture of substances. The wall surrounding the core of fill material acts to isolate the fill material from the external environment. When it is desirable to release the fill material, the capsule wall may be ruptured by mechanical pressure, for example, thereby introducing the fill material into its surroundings. Generally, microcapsules comprise separate and discrete capsules having non-interconnecting hollow spaces for a fill material. The fill material is thus enveloped within the generally continuous polymeric walls of the microcapsules, which may range from 0.1 to approximately 500 microns in diameter.

Uses for microcapsules are as varied as the materials that can be microencapsulated. Of particular importance are the uses of microcapsules in medicinal and biological preparations, fertilizers, flavorings, deodorizers, adhesives, xerographic toners, and carbonless copying systems.

Though microcapsules and microencapsulation techniques are applicable to a wide variety of products, one of the most significant applications is their use in carbonless copying systems. The present invention is particularly adaptable to carbonless copying systems and will be discussed primarily in connection with such systems. However, it should be understood that the invention is not limited to carbonless copy applications and may be used wherever the use of microcapsules is beneficial.

Carbonless copying systems usually include a plurality of paper sheets arranged in a manifold set, each sheet of the set having one or more coatings on its surfaces. The manifold set is designed so that when a marking pressure caused by a typewriter, pen, or other instrument is applied to the outermost sheet, a colored mark will be formed on at least one surface of each sheet of the manifold set.

To this end, the top sheet of the manifold set to which the marking pressure is applied is provided with a coating on its back surface. This coated back surface includes microcapsules containing an initially colorless chemically reactive color-forming dye precursor as the fill material. The upper surface of the next sheet, which is adjacent to the back surface of the top sheet, is coated with a material containing a component, such as phenolic resin or reactive clay, that is capable of reacting with the colorless dye precursor contained in the microcapsules to produce a color. Thus, a marking pressure on the upper surface of the top sheet will rupture the microcapsules on the bottom surface and release the colorless dye precursor. The colorless dye precursor then chemically reacts with the reactive component of the coated front of the lower sheet to produce a colored mark corresponding to the area of marking pressure. In similar fashion, colored marks are produced on each succeeding sheet of the manifold set by the marking pressure rupturing the microcapsules carried on the lower surfaces of each sheet.

The sheets of the manifold set in carbonless copying systems are designated in the art by the terms CB, CFB, and CF, which stand respectively for "coated back," "coated front and back," and "coated front." The CB sheet is usually the top sheet of the manifold set and the sheet upon which the marking pressure is applied. The CFB sheets are the intermediate sheets of the manifold set, each of which is able to have a mark formed on its front surface by a marking pressure and each of which also transmits the contents of ruptured microcapsules from its back surface to the front surface of the next sheet. The CF sheet is the bottom sheet and is only coated on its front surface so that an image may be formed on it.

While it is customary to have the coating containing the microcapsules on the back surface of the sheets and to have the coating containing the reactive component for the capsules on the front surface of each of the sheets, a reverse arrangement is also possible. In addition, one or more of the reactive ingredients may be carried in the sheets themselves, rather than applied as surface coatings. Furthermore, the reactive component for the colorless dye precursor may be microencapsulated instead of or in addition to the precursor. Patents illustrative of the various kinds of systems that may be used in the production of manifold carbonless copying systems include by way of example: U.S. Patents Nos.2,299,694 (Green); 2,712,507 (Green); 3,016,308 (Macauley); 3,429 ,827 (Ruus); and 3,720,534 (Macauley et al).

The literature also contains many methods and techniques for preparing microcapsules, whereby two or more reactive components are brought together to form a microcapsular wall. A majority of these methods form the encapsulating walls by providing minute discrete droplets containing the intended fill material dispersed within a continuous phase that contains at least one of the reactive components. In one class of microencapsulation technique, the walls of the microcapsules are formed from reactive components that are present only in the continuous phase and not within the dispersed droplets. Examples of such microencapsulation methods are the urea-formaldehyde polymerization technique disclosed in U.S. Patent No. 3,016,308 (Macauley), the coacervation methods described in U.S. Patent No. Re.24,899 (Green) and the dual-wall method taught in U.S. Patent No. 3 ,578,605 (Baxter).

The Macauley patent teaches the formation of a high molecular weight urea-formaldehyde condensate wall from a urea-formaldehyde precondensate that is present in the continuous phase. The reaction is carried out by adjusting the pH of the continuous phase. The Green patent discloses forming a gelatinous coating around oil droplets containing the fill material. This coating is then hardened into microcapsule walls by cross-linking agents present in the continuous phase. The Baxter patent describes forming an oil in gelatin-gum arabic aqueous emulsion with the oil containing a small amount of diacid chloride. The diacid chloride reacts with the gelatin to form an inner wall and releases HCl. The hydrogen chloride in turn induces coacervation between the gelatin and gum arabic and forms the outer wall of the microcapsule.

A second class of microencapsulation is interfacial polycondensation exemplified by U.S. Patent No. 3,429,827 (Ruus). The method taught by Ruus includes producing an aqueous dispersion of a water immiscible organic liquid containing one of the reactive components. A second reactant is then added to the aqueous phase whereupon the reactants form a polymer wall at the interface between the aqueous and organic phases.

In the context of carbonless copying systems, one common problem is the tendency for color to inadvertently develop on the CF and/or CB sheets. This unwanted color development is usually due to the presence of free colorless dye precursor on the CB sheet. The presence of free precursor on the CB sheet may be due to incomplete microencapsulation or accidental microcapsule rupture. Additionally, the walls of produced microcapsules containing the precursor may include faults or pores which allow the colorless dye precursor to leak from the microcapsules. This free dye precursor often causes discoloration by contacting the reactive CF component and thereby changing the dye precursor to its colored form. Discoloration, which has been variously referred to as blush, offset, bluing, ghosting, back-print, etc., is highly objectionable and undesirable in carbonless copying systems.

Several solutions have been suggested for reducing the incidence of discoloration caused by microcapsule permeability. U.S. Patent No. 4,218,506 (Oda et al) discloses a variety of hardener compounds for use with prepared microcapsule dispersions (see Column 4, lines 3-18), though the teachings of this patent are most applicable to microcapsules made by a coacervation technique. U.S. Patent No. 4,260, 515 (Sliwka) discloses the use of methylolmelamine, or an ether thereof, as a hardener for microcapsules having polymeric walls containing groups reactive toward aldehyde groups. U.S. Patent No. 4,209,188 (Chao et al) teaches the use of a methylolated epoxide of an epichlorohydrin/bisphenol A-type compound for closing discontinuities in microcapsules. U.S. Patent No. 4,000,087 (Maalouf) teaches the use of a polystyrene or epoxy resin in the fill material to render polyamide microcapsules resistant to inadvertent release of the fill material. Outside of the context of microcapsules, European Patent Application No. 0012587 (Ricoh) discloses the use of self-cross-linking polyamide and hydrocarbon resins having methylol groups at the ends of the molecules or side chains. However, this patent is directed to multi-layer thermo-sensitive recording materials that do not utilize microcapsules in any way.

## SUMMARY OF THE INVENTION

It is an object of the present invention to provide microcapsules adapted for use in carbonless copying systems having reduced permeability such that objectionable discoloration is reduced.

It is another object of the present invention to provide methods for producing microcapsules with reduced permeability.

It is a specific object of the present invention to provide microcapsules whose discontinuities in the initial wall are closed.

According to one aspect of the present invention a method of making microcapsules with reduced permeability comprises providing a dispersed phase of minute discrete droplets and forming generally continuous encapsulating walls about the minute

droplets to thereby produce microcapsules, the improvement in combination therewith comprising reacting the walls of the produced microcapsules with a reaction product of formaldehyde and a member of the group consisting of bisphenol A; bisphenol B; bisphenol F; p.p' dihydroxy 1,1 diphenylethane; alkylated phenols; 4,4' dihydroxybiphenyl; sulfonyldiphenol; and 1,5 dihydroxynaphthalene such that the permeability of the resulting microcapsule is reduced.

The present invention also relates to a microcapsule comprising a core of fill material, at least one generally continuous wall encapsulating the core, and the result of the reaction of (a) a reaction product of (1) formaldehyde and (2) a member of the group consisting of bisphenol A; bisphenol B; bisphenol F; p,p' dihydroxy 1,1 diphenylethane; alkylated phenols; 4,4' dihydroxybiphenyl; sulfonyldiphenol; and 1,5 dihydroxynaphthalene with (b) the material of the outermost wall such that the result forms at least a portion of the outermost surface of the microcapsule. Of the above compounds, the reaction products of formaldehyde and the bisphenol compounds are preferred. The present invention may be used with numerous types of microcapsule systems including microcapsules prepared by interfacial polycondensation, in

0134114

microcapsule slurry in one of two ways. First, it may be directly added to the slurry as such. Alternatively, formaldehyde and a member of the group consisting of bisphenol A; bisphenol B; bisphenol F; p,p' dihydroxy 1,1 diphenylethane; alkylated phenols; 4,4' dihydroxybiphenyl; sulfonyldiphenol; and 1,5 dihydroxynaphthalene may be separately added to the microcapsule slurry. In this latter alternative, the formaldehyde and the selected member then react to form the reaction product. In either case, however, the reaction product further reacts with the existing wall of the microcapsule and acts to close discontinuities in the wall structure that might otherwise allow the fill material to leak through the microcapsule wall.

The reaction product should be added into the produced microcapsule slurry at a concentration of about 0.05% to 5% based on the dry weight of the produced microcapsules and the dry weight of the reaction product. The resulting slurry of the reaction product and microcapsules should then be allowed to react for about one to about twenty-four hours.

The present invention may be used with any of the following classes of microcapsules: (a) polyamide, polyurea, polyurethane, and polyester microcapsules, all of which are prepared by interfacial polycondensation; (b) urea-formaldehyde and melamine-formaldehyde microcapsules, both of which are prepared by in situ condensation; (c) gum arabic/gelatin microcapsules formed by coacervation; and situ condensation, the dual wall method, or coacervation.

## DESCRIPTION OF THE
## PREFERRED EMBODIMENTS

In the present invention, the reaction product of formaldehyde and a member of the group consisting of bisphenol A; bisphenol B; bisphenol F; p,p' dihydroxy 1,1 diphenylethane; alkylated phenols, 4,4' dihydroxybiphenyl; sulfonyldiphenol; and 1,5 dihydroxynaphthalene are used to modify the walls of microcapsules such that the porosity of the microcapsular walls is reduced. This reduction in porosity, in turn, reduces the incidence of unwanted discoloration in carbonless copying systems.

The reaction products that are appropriate for use with the present invention may be prepared by reacting formaldehyde with the selected member under moderate heat, e.g. 80-85$^O$C, for several hours. For every equivalent weight of formaldehyde, 0.4-1.2 equivalent weights of the other compound should be used. The most advantageous ratio can be determined by routine experimentation.

The reaction product may be added to the aqueous

0134114

(d) dual wall microcapsules. Though applicant is not certain of the precise mechanism that results in the salutary advantages of his invention, it is believed that the reaction products react with either hydroxyl groups or amino groups or both that are often present on the walls of the above known microcapsules. Such reactions would form a highly cross-linked structure that would inherently exhibit reduced permeability.

In connection with carbonless copy systems, the fill material to be encapsulated within the inventive microcapsules will usually be a colorless dye precursor such as crystal violet lactone, benzoylleucomethylene blue, rhodamine lactam, p-toluenesulfinate of Michler's hydrol (PTSMH), or any of the various chromogenic compounds that are capable of changing from a colorless to a colored form on contact with reactive substances, such as phenolic resins or reactive clays.

When a colorless dye precursor is used as the fill material, an organic solvent capable of dissolving or suspending the dye precursor must be used. Suitable organic solvents include benzylbutylphthalate, dibutylphthalate (DBP), toluene, various xylenes, alkylbenzenes, alkylnaphthalenes, and biphenyls. Aqueous emulsification solutions that are useful with respect to the present invention include emulsifiers such as polyvinylpyrrolidone, polyvinyl alcohol, polyethylene glycol, starch, carboxymethylcellulose, and hydroxyethylcellulose, dissolved in water.

Of course, the novel methods of microencapsulation and microcapsules disclosed here are not limited to use on carbonless copying systems. The fill material could comprise pesticides, insecticides, flavors, fragrances, colored dye solutions, oils, solvents, xerographic toners, plasticizers, or any other materials where microencapsulation would be beneficial. For example, capsules prepared by this invention would be useful for slow release applications.

Preparation of a Control Capsule Slurry

EXAMPLE 1

6.52 parts of terephthaloyl chloride and 2 parts of PTSMH were heat dissolved in 60 parts of DBP. After bringing the solution to room temperature ($20^{\circ}$C), it was emulsified in 200 parts of 2% Vinol 540 solution in a Waring blender to a particle size range of 1 to 20 microns. (Vinol 540 is a partially hydrolyzed polyvinyl alcohol, sold by Air Products & Chemicals, Inc). Into this emulsion, an aqueous solution containing 2.42 parts of diethylenetriamine, 1.8 parts of sodium carbonate, 1 part of sodium hydroxide, and 20 parts of water was added. The resulting slurry was then stirred with a low speed mechanical stirrer at room temperature for 16 hours. Polyamide microcapsules were obtained encapsulating the PTSMH solution.

Synthesis of Methylolated Bisphenol A

EXAMPLE 2

30.2 parts of bisphenol A were placed in a glass

-13-

0134114

beaker. 16 parts of methanol, 5 parts of water, 11.8 parts of a 37% formaldehyde solution, and 2.85 parts of sodium hydroxide were added to the beaker. This mixture was then heated to 80-85$^{O}$C for 3 hours. Methylolated bisphenol A was obtained.

Synthesis of Methylolated Bisphenol B

EXAMPLE 3

The method of Example 2 was followed except that 32.1 parts of bisphenol B was used instead of 30.2 parts of bisphenol A. Methylolated bisphenol B was obtained.

Preparation of Microcapsules with Reduced Permeability

EXAMPLE 4

The methylolated bisphenol A of Example 2 was added into the control capsule slurry of Example 1 at a concentration of 5% based on the dry weight of the microcapsules and the methylolated bisphenol A. The resulting capsule slurry was stirred for three hours at room temperature to allow the methylolated bisphenol A to react with and modify the capsule wall.

EXAMPLE 5

The method of Example 4 was used except that the methylolated bisphenol B of Example 3 was substituted for the methylolated bisphenol A of Example 2. A slurry of modified microcapsules was obtained.

COMPARATIVE EXAMPLE 6

The control capsule slurry of Example 1 and the modified capsule slurries of Examples 4 and 5 were each

-14- 0134114

coated on a paper substrate (Oxford Acid 11# bond paper) at a coat weight of about 3.3 grams per square meter. The coated sheets were typed against a clay coated CF sheet and the intensity of the images formed were measured (see Table I).

Permeability of the capsule wall was tested accordingly to an "accelerated permeability test." In this test, a 3" x 6" CB sheet was stacked together with a 3" x 6" CF sheet under a 27 lb. weight and placed in a 100°C oven for 2 hours. After that, the CB and CF sheets were separated. Any discoloration on the CF is a result of the dye solution diffusing through the capsule wall and transferring on the CF. The reflectance of the discoloration was measured using a BNL-2 Opacimeter Model 600318 made by Diano Corporation (see Table I). A reading of 100 would mean that the capsule wall was absolutely impermeable, while lower readings indicate a more porous, microcapsular membrane.

TABLE I

| Capsule Type | Image Intensity | Accelerated Permeability |
|---|---|---|
| Control Capsule (Ex.1) | 46.7 | 91.7 |
| Control + Methylolated Bisphenol A (Ex.4) | 47.6 | 95.8 |
| Control + Methylolated Bisphenol B (Ex.5) | 47.4 | 95.8 |

It can be seen that image intensity is not significantly affected by modification with methylolated bisphenols. However, the capsule walls do exhibit much less permeability through modification according to the

present invention.                                    0134114

## COMPARATIVE EXAMPLE 7

16.55 parts of an aqueous solution containing 4.21 parts of 1, 5 dihydroxynaphthalene and 2.34 parts of a 37% formaldehyde solution was added to 277.8 parts of the control slurry of Example 1. The resulting slurry was then heated to 60°C for 30 minutes to complete the capsule wall modification. The accelerated permeability of the modified capsule coating was 94.3 compared to 91.3 for the control coating.

## COMPARATIVE EXAMPLE 8

12.64 parts of an aqueous solution containing 4.46 parts of sulfonyldiphenol and 3.18 parts of a 37% formaldehyde solution was added to 277.8 parts of the control capsule slurry of Example 1. This slurry was then heated to 60°C for 30 minutes to allow completion of the modification reaction on the capsule walls. The accelerated permeability of the resulting capsule coating was 92.6 compared to 91.4 for the control coating.

## COMPARATIVE EXAMPLE 9

An experimental methylolated bisphenol A manufactured by Anderson Development Company (Adrian, Michigan) was added into the control capsule slurry of Example 1 at a concentration of 4 dry weight percent. The slurry was allowed to react under mild stirring for 3 hours to complete the modification. Accelerated permeability of the modified coating had a reading of 95.5 compared

0134114

to 91.7 for the control coating.

### COMPARATIVE EXAMPLE 10

In this example, two methylolated alkyl phenols manufactured by Schenectady Chemical Company: SP-144 and SP-1120, were evaluated with the control capsule slurry of Example 1 at a 3% concentration based on dry weight. The slurries were stirred for 3 hours at room temperature to complete the modification reaction. Coatings of these slurries resulted in improved accelerated permeability test readings as shown in Table II.

### TABLE II

| Capsule Type | Accelerated Permeability |
| --- | --- |
| Control | 90.6 |
| Control + SP-144 | 92.3 |
| Control + SP-1120 | 93.6 |

As can be seen from the accelerated permeability readings of Comparative Examples 6 through 10, there is noticeable improvement in the impermeability of microcapsules treated according to the present invention. The most significant improvement in impermeability occurs with methylolated bisphenols.

It is to be understood that the above specification emphasizes certain embodiments and features of the present invention and that many embodiments not specifically described above may come within the spirit and scope of the present invention as claimed hereafter.

WE CLAIM:

1.  In a method of making microcapsules by providing a dispersed phase of minute discrete droplets and forming generally continuous encapsulating walls about the minute droplets to thereby produce microcapsules, the improvement in combination therewith comprising reacting the walls of the produced microcapsules with a reaction product of formaldehyde and a member of the group consisting of bisphenol A; bisphenol B; bisphenol F; p,p' dihydroxy 1,1 diphenylethane; alkylated phenols; 4,4' dihydroxybiphenyl; sulfonyldiphenol; and 1,5 dihydroxynaphthalene such that the permeability of the resulting microcapsules is reduced.

2.  The method of Claim 1 wherein the reaction product compound is added to the continuous phase subsequent to the formation of the produced microcapsules.

3.  The method of Claim 1 or 2 wherein formaldehyde and a member of the group consisting of bisphenol A; bisphenol B; bisphenol F; p,p' dihydroxy 1,1 diphenylethane; alkylated phenols, 4.4' dihydroxybiphenyl; sulfonyldiphenol; and 1,5 dihydroxynaphthalene are added to the continuous phase subsequent to the formation of the produced microcapsules, the formaldehyde and the member of the group consisting of bisphenol A; bisphenol B; bisphenol F; p,p' dihydroxy 1,1 diphenylethane: alkylated phenols; 4,4' dihydroxybiphenyl; sulfonyldiphenol; and 1,5 dihydroxynaphthalene then reacting to form the reaction product.

4.    The method of Claim 1, 2 or 3 wherein the produced microcapsule walls are formed by interfacial polycondensation.

5.    The method according to any one of the preceding claims wherein the produced microcapsule walls are formed by depositing urea-formaldehyde condensate over the minute discrete droplets.

6.    The method according to any one of the preceding claims wherein the produced microcapsule walls are formed by reacting diacid chloride included in the minute discrete droplets with gelatin and gum arabic included in the continuous phase.

7.    The method of Claim 1 wherein the produced microcapsule walls are formed by coacervation.

8.    A microcapsule with reduced permeability comprising a fill material, a produced microcapsule having at least one generally continuous wall encapsulating the fill material, and the result of the reaction between (a) a reaction product  of (1) formaldehyde and (2) a member of the group consisting of bisphenol A; bisphenol B; bisphenol F; p,p' dihydroxy 1,1 diphenylethane; alkylated phenols; 4,4' dihydroxybiphenyl;  sulfonyldiphenol;  and 1,5 dihydroxynaphthalene and (b) the wall, the result forming at least a portion of the outermost surface of the resulting microcapsule.

9.    A carbonless copying system comprising a substrate, a coating containing a plurality of microcapsules over at least a portion of the substrate, and a substance

0134114

capable of reacting with the colorless dye precursor to produce a colored reaction product, the substance being in reactive contact with the microcapsules.

10. A method of making microcapsules, a microcapsule and a carbonless copying system substantially as herein described.